# EUROPEAN PATENT APPLICATION

(11) **EP 3 862 810 A1**
(43) Date of publication of application: **11.08.2021**
(21) Application number: 19932271.0
(22) Date of filing: 26.06.2019
(51) Int. Cl.: G03B 9/22

(54) **MOTOR, SHUTTER DEVICE, AND PHOTOGRAPHING DEVICE**

(71) Applicant: SZ DJI Technology Co., Ltd., Shenzhen, Guangdong 518057 (CN)
(72) Inventor: ZHU, Zhilong, Shenzhen, Guangdong 518057 (CN)
(74) Representative: Appelt, Christian W.
(86) International application number: PCT/CN2019/093100
(87) International publication number: WO 2020/258096

(57) **Abstract**

Embodiments of the present invention provide a motor applicable to a shutter device, including a printed circuit board assembly with a winding, a stator iron core, a rotor, and a magnet mounted on the rotor. The printed circuit board assembly includes a first side and a second side. The stator iron core is mounted on the first side of the printed circuit board assembly, and the winding winds around the stator iron core. The rotor and the magnet are mounted on the second side of the printed circuit board assembly and spaced apart from the winding. In the embodiments of the present invention, the motor has a flat structure, thereby facilitating miniaturization of the shutter device. The embodiments of the present invention further provide a shutter device, and a photographing device including the shutter device.

## Description

### TECHNICAL FIELD

Embodiments of the present invention relate to the technical field of imaging devices, and in particular, to a motor applied to a shutter device, a shutter device, and a photographing device.

### BACKGROUND

Camera shutters generally include focal plane shutters, and inter-lens shutters, and the like. A focal plane shutter is a shutter placed in front of a focal plane for imaging, which generally refers to a rolling shutter. Power released by a front curtain and a rear curtain comes from a spring and a connecting rod assembly. A geared motor winds the front curtain and the rear curtain simultaneously by means of the spring and the connecting rod assembly. The front curtain and the rear curtain each are separately controlled by an electromagnet, so that sequential actions of the front curtain and the rear curtain are implemented. The focal plane shutter is mainly applied to a single-lens reflex camera.

An inter-lens shutter is a shutter placed in a position of a diaphragm in a lens, and is also referred to as a blade shutter. A blade assembly is driven by left and right link mechanisms. The left and right link mechanisms are connected in series to a rotor of an electromagnet. The rotor has two stable positions (a permanent magnetic force provides a self-locking force). The electromagnet is configured to control the release and retraction of the rotor. A reaction spring helps the electromagnet to start and brake. The inter-lens shutter is mainly applied to a portable camera and some lenses.

However, the existing inter-lens shutter generally has disadvantages such as a complex structure, a large volume, and a heavy weight.

In addition, in recent years, the size of a camera module has been gradually reduced with development of technologies, but the size of a shutter driving device is still a major obstacle restricting the miniaturization of a camera module.

### SUMMARY

Embodiments of the present invention provide a motor, a shutter device, and a photographing device.

According to a first aspect of the embodiments of the present invention, a motor is provided, which is applicable to a shutter device. The motor includes a printed circuit board assembly including a winding, the printed circuit board assembly includes a first side and a second side; a stator iron core mounted on the first side of the printed circuit board assembly, and the winding winding around the stator iron core; and a rotor and a magnet mounted on the rotor, the rotor and the magnet being mounted on the second side of the printed circuit board assembly and spaced apart from the winding.

The motor of the embodiments of the present invention has a flattened structure, thereby facilitating the miniaturization of the shutter device.

According to another aspect of the embodiments of the present invention, a shutter device is provided, including the motor mentioned above and a shutter blade, where the shutter blade is linked to the rotor of the motor, and configured to switch a light source of an exposure area when a shutter is closed, where when the motor operates, the winding is energized, and the rotor rotates to implement opening and closing actions of the shutter blade.

According to yet another aspect of the embodiments of the present invention, a photographing device is provided, including the shutter device mentioned above.

For the shutter device and the photographing device according to the embodiments of the present invention, an axial flux motor including a printed circuit board assembly with a winding is used in a shutter, the structure of the axial flux motor is optimized, and the magnetic permeability is increased. The present invention has a compact and simple structure, and low costs.

### BRIEF DESCRIPTION OF THE DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an overall schematic view of a shutter device according to an embodiment of the present invention;
FIG. 2 is a schematic exploded view of the shutter device shown in FIG. 1;
FIG. 3 is a schematic back view of the shutter device shown in FIG. 1 in an open state;
FIG. 4 is a schematic back view of the shutter device shown in FIG. 1 in a closed state;
FIG. 5 is a schematic sectional view of the shutter device shown in FIG. 1 along an A-A line;
FIG. 6 is an enlarged view of a circled part in the shutter device shown in FIG. 5;
FIG. 7 is a schematic three-dimensional view of a shutter device according to another embodiment of the present invention;
FIG. 8 is a schematic exploded view of the shutter device shown in FIG. 7;
FIG. 9 is a schematic front view of the shutter device shown in FIG. 1 in an open state;
FIG. 10 is a schematic sectional view of the shutter device shown in FIG. 9 along a B-B line;
FIG. 11 is an enlarged view of a circled part in the shutter device shown in FIG. 10;
FIG. 12 is a schematic side view of the shutter device shown in FIG. 7; and
FIG. 13 is an enlarged view of a circled part in the shutter device shown in FIG. 12.

### DETAILED DESCRIPTION

The following clearly and fully describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the scope of protection of the present invention.

Exemplary embodiments are described in detail herein, and examples of the exemplary embodiments are presented in the accompanying drawings. When the following description relates to the accompanying drawings, unless otherwise specified, same numbers in different accompanying drawings represent same or similar elements. Implementations described in the following exemplary embodiments do not represent all implementations consistent with the present invention. On the contrary, they are only some examples of devices and methods that are described in the appended claims in detail and that are consistent with some aspects of the present invention.

The terms used in the present invention are used only to describe specific embodiments, and not intended to limit the present invention. The terms "a", "said", and "the" in singular forms used in the present invention and the appended claims are also intended to include plural forms, unless otherwise clearly indicated in a context. It should also be understood that the term "and/or" used in this specification indicates and includes any or all possible combinations of one or more associated listed items. Unless otherwise specified, the terms "before", "after", "below", and/or "above", and the like, are used only for ease of description, and not intended to limit a location or a spatial direction. The terms "connection" or "connected", and the like, are not limited to a physical or mechanical connection, but may also include an electrical connection, whether direct or indirect. The term "can/be able to" in the present invention may mean having a capability.

The embodiments of the present invention are hereinafter described in detail with reference to the accompanying drawings. Under a condition that no conflict occurs, the following embodiments and features in embodiments may be combined with each other.

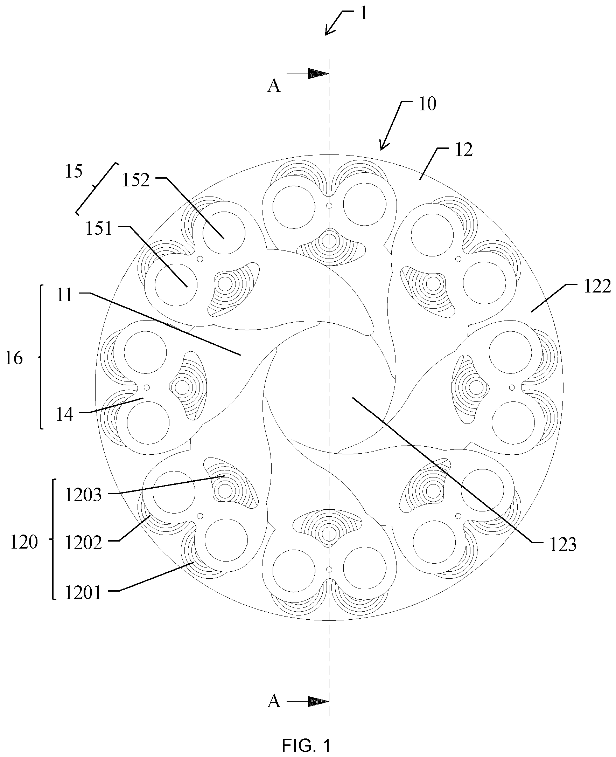

FIG. 1 to FIG. 6 show a shutter device 1 according to a first embodiment of the present invention. As shown in FIG. 1 to FIG. 6, the shutter device 1 in the first embodiment of the present invention includes a motor 10 and a shutter blade 11. The motor 10 includes a printed circuit board assembly 12 having a winding 120, a stator iron core 13, a rotor 14, and a magnet 15 mounted on the rotor 14. The winding 120, the printed circuit board assembly 12 and the stator iron core 13 may be respectively referred to as a first winding, a first printed circuit board assembly, and a first stator iron core. The printed circuit board assembly 12 includes a first side 121 and a second side 122; the stator iron core 13 is mounted on the first side 121 of the printed circuit board assembly 12, and the winding 120 winds around the stator iron core 13. The rotor 14 and the magnet 15 are mounted on the second side 122 of the printed circuit board assembly 12 and spaced apart from the winding 120. The shutter blade 11 is linked to the rotor 14 of the motor 10 and configured to switch a light source of an exposure area when a shutter is closed.

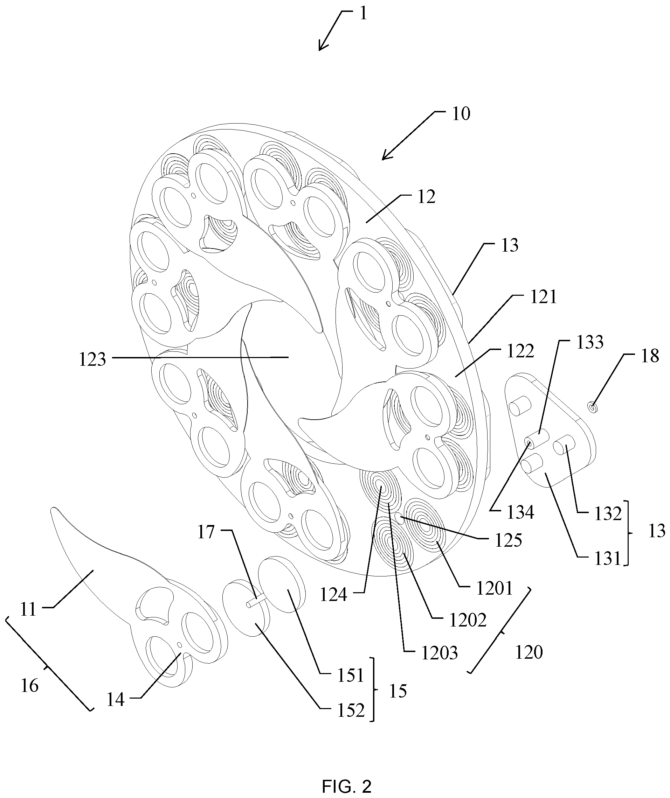

As shown in FIG. 1 and FIG. 2, in some embodiments, the rotor 14 and the shutter blade 11 are integrally injection-molded to form an integral rotor blade 16. Therefore, a structure can be simplified and rotary inertia of a rotating portion can be reduced. In the following embodiments and drawings of the present invention, an integral rotor blade 16 is used as an example for description. However, it should be understood that in the shutter device 1 in embodiments of the present invention, the rotor 14 and the shutter blade 11 should not be limited to integral forming. In other embodiments, the rotor 14 and the shutter blade 11 may be two independent components.

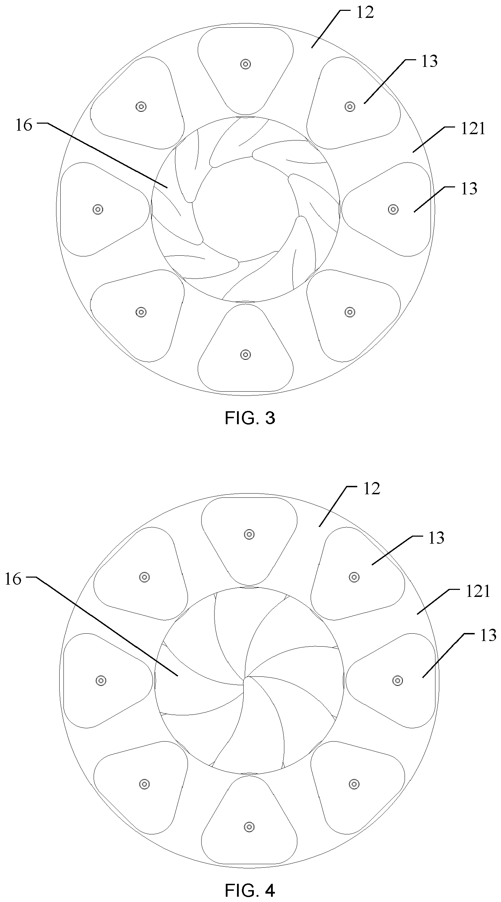

The stator iron core 13 is made of a magnetic material, which can increase magnetic permeability. When the winding 120 is not energized, attractive forces between the stator iron core 13 and the magnet 15 are balanced, the motor 10 is in a stable state, and the rotor blade 16 is in an open state, as shown in FIG. 3. When the winding 120 is energized, a magnetic field is formed under a joint action with the stator iron core 13, and the magnet 15 is deflected under an action of the magnetic field. Therefore, the balance between the stator iron core 13 and the magnet 15 is broken, and the deflection of the magnet 15 drives the rotor 14 to rotate. Since the shutter blade 11 is linked to the rotor 14 of the motor 10, the rotation of the rotor 14 further drives the shutter blade 11 to rotate, that is, to drive the rotor blade 16 to rotate. The rotor 14 continues to rotate, when a new balance point between the stator iron core 13 and the magnet 15 is reached, the rotor blade 16 is in a closed state, as shown in FIG. 4. Therefore, opening and closing actions of the rotor blade 16 are implemented by energization and de-energization of the winding 120.

The printed circuit board assembly 12 in this specification includes a printed circuit board and conducting wires (not shown) formed on the printed circuit board. In some embodiments, the winding 120 is integrated to the printed circuit board assembly 12 through a printed circuit board manufacturing process. For example, the winding 120 may be directly formed on the printed circuit board through screen printing on the printed circuit board. Therefore, the motor 10 can be flattened, the size and volume of the motor 10 are reduced, the structure is further simplified, and costs are reduced. In the following embodiments and drawings of the present invention, detailed descriptions will be provided by using an example in which the winding 120 is integrated into the printed circuit board assembly 12. However, the shutter device 1 in embodiments of the present invention should not be limited to the form in which the winding 120 is integrated into the printed circuit board assembly 12. In other embodiments, the winding 120 may be in a form of an integrated winding 120, and then the integrated winding 120 is fixed on the printed circuit board assembly 12 by means of welding or the like, so that a torque of the motor 10 can be effectively increased.

In some embodiments of the present invention, the motor 10 is an axial flux motor. A plurality of rotor blades 16 may be included. Correspondingly, the motor 10 also includes a plurality of rotors 14, a plurality of magnets 15, a plurality of stator iron cores 13, and a plurality of windings 120 corresponding to the quantity of the rotor blades 16. The printed circuit board assembly 12 is in an annular shape, and has an aperture 123 in a center of the printed circuit board assembly 12. The plurality of windings 120, the plurality of rotors 14 and the plurality of stator iron cores 13 are all annularly distributed along the aperture 123 of the printed circuit board assembly 12.

The motor 10 in some embodiments of the present invention is an axial flux motor. The plurality of windings 120, the plurality of rotors 14 and the plurality of stator iron cores 13 are annularly distributed along the aperture 123 of the printed circuit board 12. In addition, the windings 120 are integrated to the printed circuit board assembly 12, so that the motor 10 can be flattened, thereby facilitating miniaturization of the shutter device 1.

In this embodiment of the present invention, the axial flux motor 10 is used as power to directly drive the rotor blade 16, and a cogging torque of the magnet 15 and the stator iron core 13 is used to meet the two stable-state requirements for the opening and closing of the rotor blade 16. The structure is simple and highly reliable. In addition, power-on calibration is controlled to implement blade synchronization control.

As shown in FIG. 2, the stator iron core 13 includes an iron core limb 132, and the winding 120 winds around the iron core limb 132 and extends from the first side 121 of the printed circuit board assembly 12 to the second side 122 of the printed circuit board assembly 12. In some embodiments, the stator iron core 13 may further include a flat portion 131, and the iron core limb 132 protrudes out of the flat portion 131. The iron core limb 132 extends from the first side 121 of the printed circuit board assembly 12 to the second side 122 of the printed circuit board assembly 12 through a through hole 124 on the printed circuit board assembly 12. The flat portion 131 is located on the first side 121 of the printed circuit board assembly 121.

The rotor blade 16 is rotatably mounted on the printed circuit board assembly 12 via a rotating shaft 17, and is spaced apart from and opposite to the flat portion 131 of the stator iron core 13. In some embodiments, a positioning rod 133 is further disposed along with the iron core limb 132 on the same side of the flat portion 131 of the stator iron core 13, and a positioning hole 134 is formed in the positioning rod 133. The rotating shaft 17 penetrates the rotor 14 and a through hole 125 on the printed circuit board assembly 12, and is positioned in the positioning hole 134 of the positioning rod 133 on the flat portion 131.

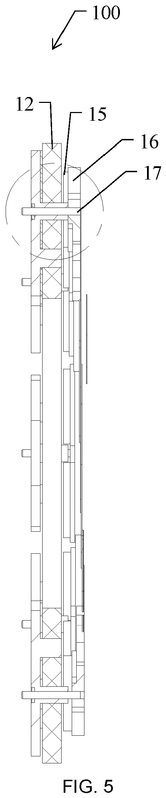

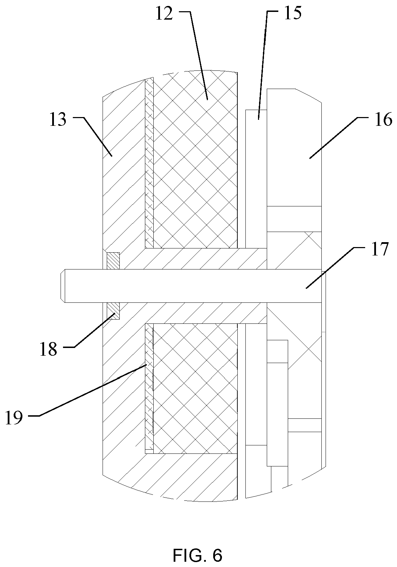

As shown in FIG. 5 and FIG. 6, to avoid axial detachment of the rotating shaft 17, the shutter device 1 may further include a washer 18. In an embodiment, the washer 18 is disposed between the rotating shaft 17 and the positioning hole 134 of the flat portion 131 of the stator iron core 13. There is an interference fit between the washer 18 and the rotating shaft 17 to avoid axial movement of the rotating shaft 17 but only allow axial rotation of the rotating shaft 17.

Referring to FIG. 2 again, in some embodiments, the winding 120 includes a first sub-winding 1201, a second sub-winding 1202, and a third sub-winding 1203. Correspondingly, the stator iron core 13 includes three iron core limbs 132, and each of the first sub-winding 1201, the second sub-winding 1202, and the third sub-winding winds 1203 winds around one iron core limb 132.

In an embodiment, the first sub-winding 1201, the second sub-winding 1202 and the third sub-winding 1203 are evenly distributed around the rotating shaft 17.

The magnet 15 includes an N-S magnet 151 and an S-N magnet 152. When the motor 10 is in the stable state, the rotor blade 16 is in the open state, that is, when the rotor 14 is in a first stable position, the N-S magnet 151 and the S-N magnet 152 respectively directly face the first sub-winding 1201 and the second sub-winding 1202. When the winding 120 is energized, a closed magnetic field is formed under a joint action with the stator iron core 13, and the closed magnetic field drives the rotor blade 16 to rotate clockwise. The N-S magnet 151 and the S-N magnet 152 rotate to positions directly facing the second sub-winding 1202 and the third sub-winding 1203 respectively. In this case, the rotor blade 16 is closed and the rotor 14 is in a second stable position. Since the winding 120 is energized by an alternating current, during continuous energization, the N-S magnet 151 and the S-N magnet 152 rotate in an opposite direction. Therefore, the N-S magnet 151 and the S-N magnet 152 return from the positions that directly face the second sub-winding 1202 and the third sub-winding 1203, to positions that directly face the first sub-winding 1201 and the second sub-winding 1202, that is, the rotor returns to the first stable position.

However, an arrangement of the first sub-winding 1201, the second sub-winding 1202 and the third sub-winding 1203 in the winding 120 of embodiments of the present invention should not be limited to an arrangement of equilateral triangle. In another embodiment of the present invention, with defining the position of the rotor 14 directly facing the first sub-winding 1201 and the second sub-winding 1202 as the first stable position and the position of the rotor 14 directly facing the second sub-winding 1202 and the third sub-winding 1203 as the second stable position, where the first stable position is a position of the rotor when the shutter is in the open state, and the second stable position is a position of the rotor when the shutter is in the closed state. This only needs to ensure that a distance between centers of the first sub-winding 1201 and the second sub-winding 1202 and a distance between centers of the second sub-winding 1202 and the third sub-winding 1203 are equal.

Still referring to FIG. 5 and FIG. 6, a cooling fin 19 is disposed between the flat portion 131 of the stator iron core 13 and the printed circuit board assembly 12. In an embodiment, the cooling fin 19 is a thermal silica gel, and the thermal silica gel transfers heat from the printed circuit board assembly 12 to the stator iron core 13 for heat dissipation. The stator iron core 13 in this embodiment of the present invention functions for both magnetic conduction and heat dissipation.

In some embodiments, at least eight rotor blades 16 are included, so that a problem of pinwheel effect can be resolved. In the drawings of the embodiments of the present invention, eight rotor blades 16 are shown, and the eight rotor blades 16 cooperate to implement their opening and closing actions based on energization and de-energization of the winding 120.

In this embodiment of the present invention, the axial flux motor 10 that uses the printed circuit board assembly 12 having the winding 120 can be applied to a shutter, and the structure of the axial flux motor 10 is optimized to increase magnetic permeability. Therefore, the structure is compact and simple, and the costs are low.

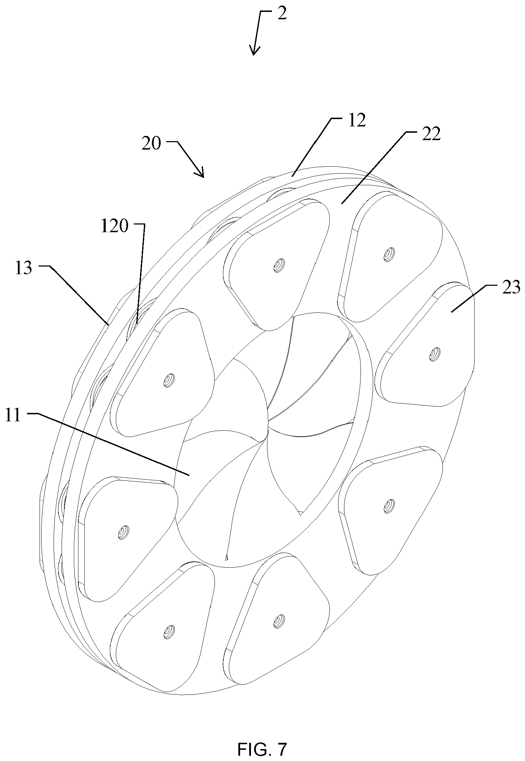

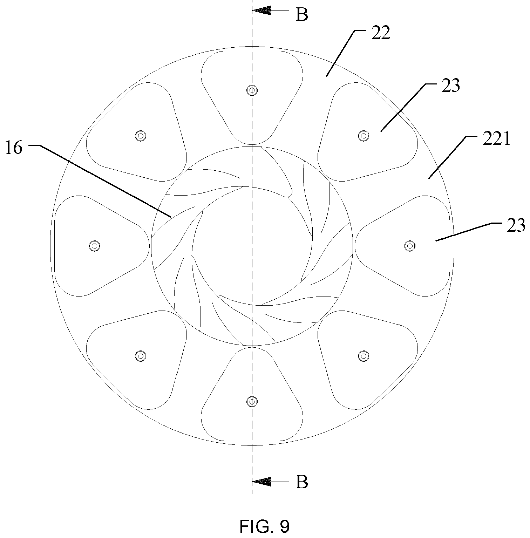

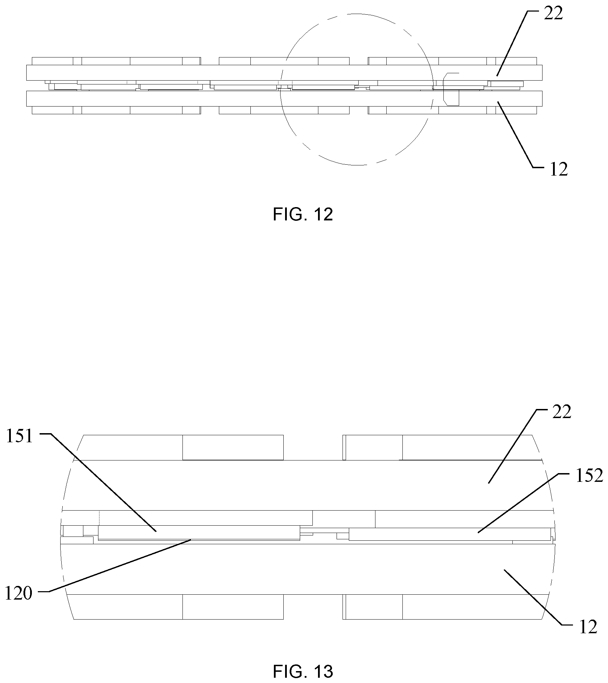

FIG. 7 to FIG. 13 show a shutter device 2 according to a second embodiment of the present invention. As shown in FIG. 7 to FIG. 13, the shutter device 2 in the second embodiment of the present invention includes a motor 20 and a shutter blade 11. Compared with the motor 10 of the shutter device 1 in the first embodiment, in addition to structures such as the printed circuit board assembly 12 having the winding 120, the stator iron core 13, the rotor 14, and the magnet 15 mounted on the rotor 14, the motor 20 of the shutter device 2 in the second embodiment of the present invention further includes a second printed circuit board assembly 22 having a second winding 220 and a second stator iron core 23 on a basis of the motor 10 of the shutter device 1 in the first embodiment. The second printed circuit board assembly 22 has a first side 221 and a second side 222, the second stator iron core 23 is disposed on the first side 221 of the second printed circuit board assembly 22, and the rotor 14 and the magnet 15 are located on the second side 222 of the second printed circuit board assembly 22 and spaced apart from the second winding 220 of the second printed circuit board assembly 22.

The rotor 14 is sandwiched between the second printed circuit board assembly 22 having the second winding 220 and the printed circuit board assembly 12 having the winding 120. The second printed circuit board assembly 22 and the printed circuit board assembly 12 are sandwiched between the second stator iron core 23 and the stator iron core 13.

The second winding 220 may also be integrated to the second printed circuit board assembly 22 through a screen printing process, or the second winding 220 is an integrated winding and may be fixed on the second printed circuit board assembly 22 by welding or the like.

The second printed circuit board assembly 22, the second winding 220 and the second stator iron core 23 have structures similar to those of the printed circuit board assembly 12, the winding 120 and the stator iron core 13. The second printed circuit board assembly 22 is also in an annular shape, and has an aperture 223 in a center of the second printed circuit board assembly 22. A plurality of second windings 220 and a plurality of stator iron cores 23 are all annularly distributed along the aperture 223 of the second printed circuit board assembly 22. In addition, positions of the second winding 220 and the second stator iron core 23 respectively correspond to positions of the winding 120 and the stator iron core 13, and quantities of the second winding(s) 220 and the second stator iron core(s) 23 respectively correspond to quantities of the winding(s) 120 and the stator iron core(s) 13. Thus, details will not be described herein.

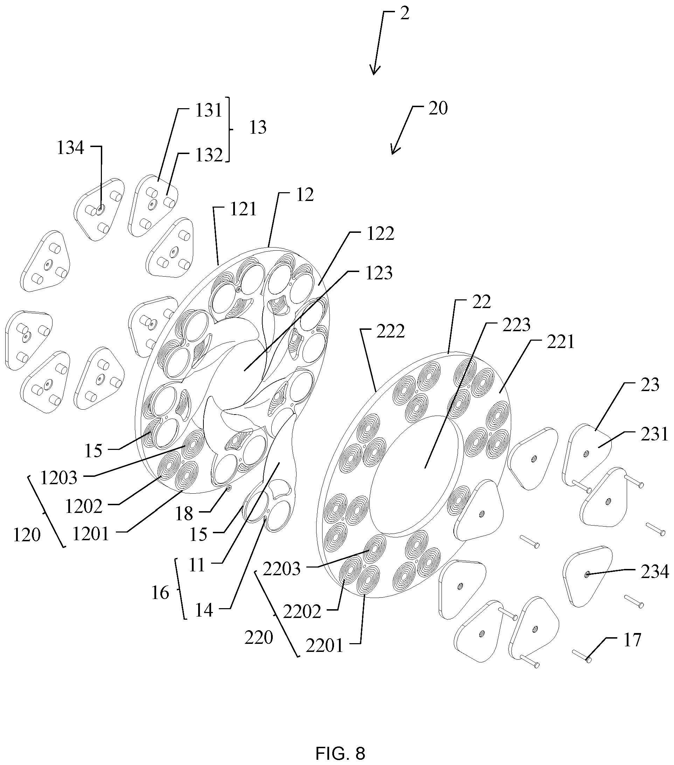

As shown in FIG. 8, in some embodiments, similarly, the second winding 220 also includes a first sub-winding 2201, a second sub-winding 2202 and a third sub-winding 2203, and the first sub-winding 2201, the second sub-winding 2202 and the third sub-winding 2203 in the second winding 220 respectively directly face the first sub-winding 1201, the second sub-winding 1202 and the third sub-winding 1203 in the winding 120.

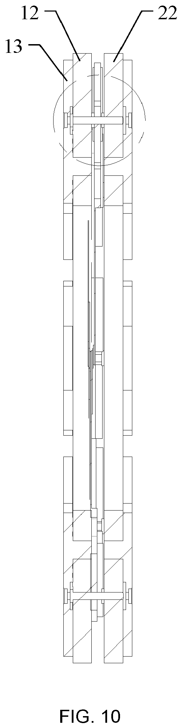

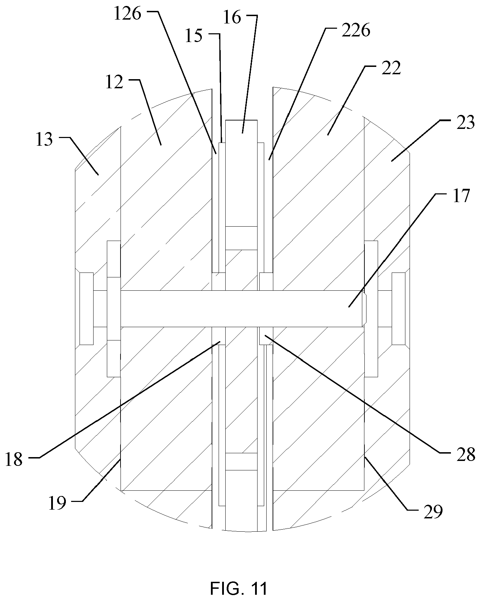

As shown in FIG. 10 and FIG. 11 and with reference to FIG. 8, a difference from the first embodiment is: no positioning rod is provided on the stator iron core 13 in the second embodiment, and the positioning hole 134 is directly disposed on the flat portion 131 of the stator iron core 13; similarly, no positioning rod is provided on the second stator iron core 23 either, rather a positioning hole 234 is directly disposed on a flat portion 231 of the second stator iron core 23.

A rotating shaft 17 passes through the printed circuit board assembly 12 and the second printed circuit board assembly 22, and is positioned in the flat portion 131 of the stator iron core 13 and the flat portion 231 of the second stator iron core 23, respectively. The rotor 14 is rotatably mounted on the printed circuit board assembly 12 and the second printed circuit board assembly 22 via the rotating shaft 17, and is spaced apart from and opposite to the flat portion 131 of the stator iron core 13 and the flat portion 231 of the second stator iron core 23 respectively.

Therefore, as shown in FIG. 11, in the second embodiment, there is a first gap 126 between the rotor 14, the magnet 15, and the winding 120 of the printed circuit board assembly 12, and there is a second gap 226 between the rotor 14, the magnet 15, and the second winding 220 of the second printed circuit board assembly 22.

When the winding 120 and the second winding 220 are not energized, attractive forces between the magnet 15 and the stator iron core 13 and attractive forces between the magnet 15 and the second stator iron core 23 are balanced, the motor 20 is in a stable state, and a rotor blade 16 is in an open state. When the winding 120 and the second winding 220 are respectively energized, a magnetic field is formed under a joint action of the stator iron core 13, and a magnetic field is formed under a joint action of the second stator iron core 23. The magnet 15 is deflected under an action of the magnetic field, which drives the rotor blade 16 to rotate. In this way, the rotor blade 16 is closed.

In some embodiments, the shutter device 2 in the second embodiment may include washers 18 and 28. As shown in FIG. 11, the washers 18 and 28 are respectively in interference fit with the rotating shaft 17 to avoid axial movement of the rotating shaft 17. The washer 18 is disposed between the printed circuit board assembly 12 and the rotor blade 16; and the washer 28 is disposed between the printed circuit board assembly 22 and the rotor blade 16.

In other embodiments, the shutter device 2 in the second embodiment may further include cooling fins 19 and 29. As shown in FIG. 11, the cooling fin 19 is disposed between the flat portion 131 of the stator iron core 13 and the printed circuit board assembly 12, and is configured to transfer heat from the printed circuit board assembly 12 to the stator iron core 13 for heat dissipation; the cooling fin 29 is disposed between the flat portion 231 of the second stator iron core 23 and the second printed circuit board assembly 22, and is configured to transfer heat from the second printed circuit board assembly 22 to the second stator iron core 23 for heat dissipation.

The motor 20 of the shutter device 2 in the second embodiment employs a sandwich-like "interlayered" structure in which one layer of rotors 14 is disposed between two layers of stator iron cores 13, and this can effectively resolve a problem of excessive magnetic pull forces between stators and rotors 14. However, embodiments of the present invention should not be limited thereto. In other embodiments of the present invention, the motor 20 may also employ a similar structure in which one layer of stator iron cores 13 is sandwiched between two layers of rotors 14, or may employ a structure in which a plurality of layers of stator iron cores 13 and a plurality of layers of rotors 14 are interleaved. All equivalent variations of similar structures shall fall within the scope of protection of the present invention.

Compared with the motor 10 in the first embodiment, the motor 20 of the shutter device 2 in the second embodiment has one more printed circuit board assembly and more stator iron cores on one side, thereby reducing magnetic leakage, and improving the efficiency.

In this specification, descriptions with the terms "certain embodiments", "an embodiment", "another embodiment", "some embodiments", "other embodiments", and the like mean that specific features, structures, materials, or conditions described with reference to the embodiment(s) are included in at least one of embodiments of the present invention. In this specification, exemplary descriptions of the foregoing terms may not necessarily refer to a same embodiment. In addition, the specific features, structures, materials, or conditions described above in this specification may be combined in any one or more of the embodiments in an appropriate manner.

An embodiment of the present invention further provides a photographing device, where the photographing device may use the shutter device 1 or 2 in any one of the foregoing embodiments.

The photographing device in embodiments of the present invention has a beneficial technical effect similar to that of the foregoing shutter device 1 or 2, and therefore will not be described again herein.

It should be noted that the relational terms herein such as "first" and "second" are used only to differentiate an entity or operation from another entity or operation, and do not require or imply any actual relationship or sequence between these entities or operations. The terms "comprise", "include", or any other variant thereof is intended to cover a non-exclusive inclusion, so that a process, a method, an article, or an device that includes a list of elements not only includes those elements but also includes other elements which are not expressly listed, or further includes elements inherent to such process, method, article, or device. In absence of more constraints, an element preceded by "includes a ..." does not preclude existence of other identical elements in the process, method, article, or device that includes the element.

The motor, shutter device, and photographing device provided by the embodiments of the present invention are described in detail above. Specific examples are used in the specification to describe the principles and implementations of the present invention. The description of the foregoing embodiments is only intended to help understand the method and core idea of the present invention. Contents of the specification should not be understood as limitations on the present invention. In addition, any modification, equivalent replacement, improvement, or the like may be made by a person of ordinary skill in the art based on the idea of the present invention to the specific implementations and the application scope of the present invention, which shall all fall within the scope of the claims of the present invention.

## Claims

1. A motor, applicable to a shutter device, **characterized in that**, comprising:
a printed circuit board assembly having a winding, the printed circuit board assembly including a first side and a second side;
a stator iron core mounted on the first side of the printed circuit board assembly, and the winding winding around the stator iron core; and
a rotor and a magnet mounted on the rotor, the rotor and the magnet being mounted on the second side of the printed circuit board assembly and spaced apart from the winding.

2. The motor according to claim 1, **characterized in that**, the winding is integrated in the printed circuit board assembly.

3. The motor according to claim 2, **characterized in that**, the winding is directly formed in the printed circuit board assembly by screening printing.

4. The motor according to claim 2, **characterized in that**, the stator iron core includes an iron core limb, and the winding winds around the iron core limb and extends from the first side of the printed circuit board assembly to the second side of the printed circuit board assembly.

5. The motor according to claim 4, **characterized in that**, the stator iron core further includes a flat portion, the iron core limb protrudes out of the flat portion, and the flat portion is located on the first side of the printed circuit board assembly.

6. The motor according to claim 5, **characterized in that**, the rotor is rotatably mounted on the printed circuit board assembly via a rotating shaft, and is spaced apart from and opposite to the flat portion of the stator iron core.

7. The motor according to claim 6, **characterized in that**, the winding includes a first sub-winding, a second sub-winding, and a third sub-winding, the stator iron core includes three iron core limbs, and each of the first sub-winding, the second sub-winding, and the third sub-winding winds around one of the iron core limbs.

8. The motor according to claim 7, **characterized in that**, a distance between centers of the first sub-winding and the second sub-winding and a distance between centers of the second sub-winding and the third sub-winding are equal, wherein a position of the rotor directly facing the first sub-winding and the second sub-winding is a first stable position, and a position of the rotor directly facing the second sub-winding and the third sub-winding is a second stable position.

9. The motor according to claim 8, **characterized in that**, the first stable position is a position of the rotor when a shutter is in an open state, and the second stable position is a position of the rotor when the shutter is in a closed state.

10. The motor according to claim 7, **characterized in that**, the first sub-winding, the second sub-winding and the third sub-winding are evenly distributed around the rotating shaft.

11. The motor according to claim 10, **characterized in that**, the magnet includes an N-S magnet and an S-N magnet, and when the motor is in a stable state, the N-S magnet and the S-N magnet directly face the first sub-winding and the second sub-winding, respectively.

12. The motor according to claim 6, **characterized in that**, further comprising a washer, the washer is disposed between the rotating shaft and a positioning hole of the flat portion of the stator iron core, and the washer is in an interference fit with the rotating shaft to avoid the rotating shaft from an axial detachment.

13. The motor according to claim 5, **characterized in that**, a cooling fin is disposed between the flat portion of the stator iron core and the printed circuit board assembly.

14. The motor according to claim 1, **characterized in that**, comprising a corresponding quantity of a plurality of windings, a plurality of rotors, a plurality of magnets, and a plurality of stator iron cores.

15. The motor according to claim 14, **characterized in that**, the printed circuit board assembly includes an aperture, and the plurality of windings, the plurality of rotors and the plurality of stator iron cores are all annularly distributed along the aperture of the printed circuit board.

16. The motor according to claim 1, **characterized in that**, the winding is an integrated winding, and the integrated winding is fixed on the printed circuit board assembly.

17. The motor according to any one of claims 1 to 16, **characterized in that**, further comprising:
a second printed circuit board assembly including a second winding, wherein the second printed circuit board assembly includes a first side and a second side, and the rotor and the magnet are located on the second side of the second printed circuit board assembly and spaced apart from the second winding of the second printed circuit board assembly; and
a second stator iron core disposed on the first side of the second printed circuit board assembly.

18. The motor according to claim 17, **characterized in that**, a structure of the second printed circuit board assembly having the second winding is substantially the same as a structure of the printed circuit board assembly having the winding.

19. The motor according to claim 17, **characterized in that**, the rotor is sandwiched between the second printed circuit board assembly having the second winding and the printed circuit board assembly having the winding.

20. The motor according to claim 17, **characterized in that**, a structure of the second stator iron core is substantially the same as a structure of the stator iron core.

21. The motor according to claim 17, **characterized in that**, the second printed circuit board assembly and the printed circuit board assembly are sandwiched between the second stator iron core and the stator iron core.

22. The motor according to claim 17, **characterized in that**, positions of the second winding and the second stator iron core respectively correspond to positions of the winding and the stator iron core.

23. The motor according to claim 17, **characterized in that**, quantities of the second winding(s) and the second stator iron core(s) respectively correspond to quantities of the winding(s) and the stator iron core(s).

24. The motor according to claim 17, **characterized in that**, the second winding is integrated in the second printed circuit board assembly.

25. A shutter device, **characterized in that**, comprising the motor according to any one of claims 1 to 24 and a shutter blade, wherein the shutter blade is linked to the rotor of the motor, and configured to switch a light source of an exposure area when a shutter is closed, wherein when the motor operates, the winding is energized, and the rotor rotates to implement opening and closing actions of the shutter blade.

26. The shutter device according to claim 25, **characterized in that**, the rotor and the shutter blade are integrally injection-molded into a rotor blade.

27. The shutter device according to claim 25, **characterized in that**, comprising a plurality of shutter blades, and a quantity of the rotors in the motor corresponds to a quantity of the shutter blades.

28. The shutter device according to claim 27, **characterized in that**, comprising eight shutter blades, and the eight shutter blades cooperate to implement the opening and closing actions of the shutter blades.

29. A photographing device, **characterized in that**, comprising the shutter device according to any one of claims 25 to 28.
